# EUROPÄISCHE PATENTANMELDUNG

(11) **EP 3 381 736 A1**
(43) Veröffentlichungstag der Anmeldung: **03.10.2018**
(21) Anmeldenummer: 18164319.8
(22) Anmeldetag: 27.03.2018
(51) Int. Cl.: B60L 11/18, H02J 7/00, B60S 5/06

(54) **MOBILE WECHSELAKKUMULATORBETRIEBENE LADESÄULE**

(30) Priorität: 28.03.2017 DE 102017205232
(71) Anmelder: Chargery GmbH, 10119 Berlin (DE)
(72) Erfinder: Brendel, Matthias, 85049 Ingolstadt (DE); Schönfeld, Malte, 85048 Ingolstadt (DE); Lang, Christian, Berlin (DE)
(74) Vertreter: Dennemeyer & Associates S.A.

(57) **Zusammenfassung**

Die Erfindung betrifft eine mobile wechselakkumulatorbetriebene Ladesäule (1), welche eine Steckeinrichtung (2) für zumindest einen Wechselakkumulator (3), eine Ladeeinheit (6), aufweisend einen Laderegler (7) und ein Anschlusskabel (8) für ein Kraftfahrzeug (9), und eine Abrechnungseinheit (10) umfasst. Die Ladesäule (1) ist dazu eingerichtet, in einem jeweiligen Ladevorgang (P2), ein elektrisch betriebenes Kraftfahrzeug (9) mit Energie der in der Steckeinrichtung (2) eingesetzten Wechselakkumulatoren (3) aufzuladen. Dies erfolgt über die Ladeeinheit (6), an deren Anschlusskabel (8) das Kraftfahrzeug (9) angeschlossen ist. Die Steckeinrichtung (2) ist dazu eingerichtet, sich für zumindest einen befugten Versorger (5) zu entriegeln, wodurch ein Austausch (P1) eines entladenen Wechselakkumulators (3) durch einen geladenen Wechselakkumulator (3) gewährt wird. Die Abrechnungseinheit (10) ist dazu eingerichtet, bei dem jeweiligen Ladevorgang (P2), für die abgegebene Energie und/oder bei dem Austausch (P1) des zumindest einen Wechselakkumulatoren (3), für die gelieferte Energie, jeweils Abrechnungsdaten (11) zu generieren.

## Beschreibung

Die Erfindung betrifft eine mobile wechselakkumulatorbetriebene Ladesäule. Eine solche Ladesäule kann z.B. in einem Wohngebiet aufgestellt werden, damit Anwohner ihre elektrischen Fahrzeuge aufladen können.

Durch die zunehmende Verbreitung von elektrisch angetriebenen Kraftfahrzeugen ist es notwendig, eine flächendeckende Infrastruktur zur Versorgung von elektrisch angetriebenen Kraftfahrzeugen bereitzustellen. Primär wird die Versorgung voraussichtlich über stationäre, d.h. ortsgebundene Ladesäulen sichergestellt werden. Die Aufstellung einer stationären Ladesäule ist jedoch zeitintensiv und erfordert eine Anbindung an das örtliche Stromnetz. Ein weiterer Nachteil besteht darin, dass es durch die Ortsbindung einer stationären Ladesäule nicht möglich ist, den Standort der Säule kurzfristig zu verlegen. Somit kann nicht auf eine kurzfristige Bedarfsänderung reagiert werden. Aufgrund der geringeren Reichweite von elektrisch angetriebenen Kraftfahrzeugen gegenüber Kraftfahrzeugen mit einem Verbrennungsmotor wird bis zu einem flächendeckenden Ausbau einer Versorgungsinfrastruktur auf eine akkumulatorbasierende Versorgung und Reichweitenerhöhung zurückgegriffen werden müssen.

Nach dem Stand der Technik existieren Wechselakkumulatorsysteme, wie beispielsweise in der EP 2737600 A2 offenbart. Diese Systeme verwenden genormte Wechselakkumulatoren, welche in einer Vielzahl von Geräten benutzt werden können. Wechselakkumulatoren weisen eine Größe sowie ein Gewicht auf, welche es einer Person ermöglichen, sie ohne den Einsatz technischer Hilfsmittel zu tragen. Ein entladener Wechselakkumulator kann dezentral geladen oder an öffentlich zugänglichen Ladestationen gegen einen geladenen Wechselakkumulator ausgetauscht werden. Nachteilig hierbei ist, dass zum Versorgen eines Kraftfahrzeugs mit Energie eine Vielzahl von solchen Wechselakkumlatoren auszutauschen wären.

Die DE 20 2014 003066 U1 beschreibt ein Stecksystem für schnelles ersetzen entleerter Akkubestandteile in Elektroautomobilen. Dabei wird ein System für Elektroautomobile beschrieben, in welches mehrere Elemente gesteckt werden können, welche in ihrer Gesamtheit den vollständigen Akku des Elektroautomobils bilden. Dabei können die einzelnen Elemente einzeln entnommen werden. Auch hier ist zum Bereitstellen einer ausreichenden Menge an Energie eine Vielzahl der Elemente nötig.

In der DE 10 2010 028 806 A1 wird ein Fahrzeug sowie eine Elektrizitätsversorgungseinheit für ein Fahrzeug beschrieben. Darin wird eine Elektrizitätsversorgungseinheit beschrieben, welche im Heckbereich eines Fahrzeugs mittels einer mechanischen Kopplung befestigt ist und Energie für die Erweiterung der Reichweite des Fahrzeugs zur Verfügung stellt. Für eine Grundversorgung des Kraftfahrzeugs ist die Elektrizitätsversorgungseinheit aber zu klein.

Die DE 10 2014 208 186 A1 offenbart ein Notrufsäulensystem, das austauschbare universelle Notbatterien für Elektrofahrzeuge enthält. Darin wird auch ein Energiespeicher beschrieben, welcher ein Transportmittel in Form eines Griffes aufweist und mit Rädern oder Rollen ausgestaltet ist. Der Energiespeicher kann auch eine Steckverbindung zum Aufladen eines Kraftfahrzeugs aufweisen. Das Notrufsäulensystem ist nur im Notfall verwendbar. Eine Verteilung von Energie an mehrere Kraftfahrzeuge kann nicht systematisch erfassbar.

Der Erfindung liegt die Aufgabe zu Grunde, eine Vorrichtung zur Verfügung zu stellen, welche eine örtlich flexible Lademöglichkeit für elektrisch betriebene Kraftfahrzeuge darstellt.

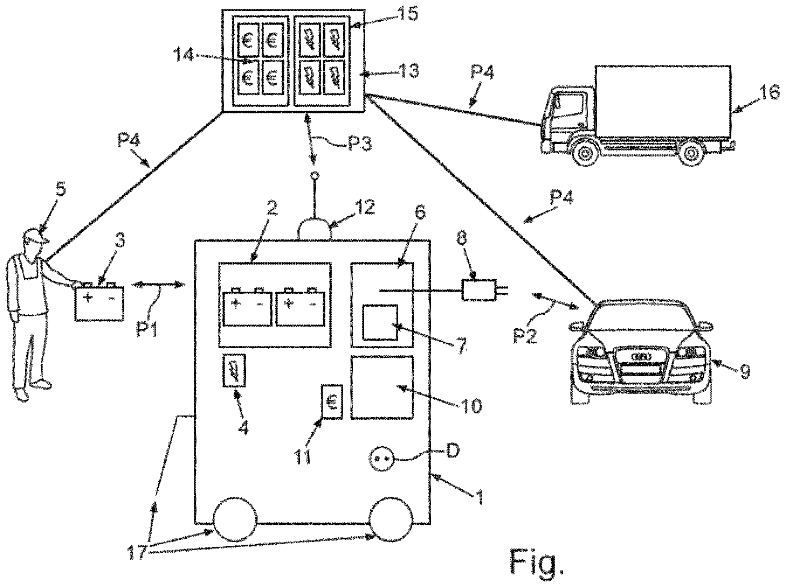

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figur offenbart.

Durch die Erfindung ist eine mobile wechselakkumulatorbetriebene Ladesäule bereitgestellt. Diese umfasst eine Steckeinrichtung für zumindest einen Wechselakkumulator, zumindest eine Ladeeinheit, welche einen Laderegler und ein Anschlusskabel und/oder eine Wechselstromsteckdose für ein Kraftfahrzeug aufweist, und eine Abrechnungseinheit. Die Ladesäule ist dazu eingerichtet in einem jeweiligen Ladevorgang ein elektrisch betriebenes Kraftfahrzeug mit Energie des zumindest einen in der Steckeinrichtung eingesetzten Wechselakkumulators über die Ladeeinheit aufzuladen. Die Steckeinrichtung ist dazu eingerichtet, sich für zumindest einen befugten Versorger zu entriegeln, wodurch ein Ersetzen eines entladenen Wechselakkumulators durch einen geladenen Wechselakkumulator gewährt wird. Die mobile wechselakkumulatorbetriebene Ladesäule umfasst auch die Abrechnungseinheit, die dazu eingerichtet ist, bei dem jeweiligen Ladevorgang für die abgegebene Energie und/oder bei dem Ersetzen des zumindest einen Wechselakkumulators für die gelieferte Energie jeweils Abrechnungsdaten zu generieren.

Die Steckeinrichtung umfasst also mindestens einen Steckplatz für einen Wechselakkumulator und ist dazu eingerichtet, Energie aus dem mindestens einen Wechselakkumulator zu beziehen und in der Ladesäule zur Verfügung zu stellen. Ein Wechselakkumulator ist dabei bevorzugt so in die Steckeinrichtung gesteckt, dass er nur durch die Entriegelung entnehmbar ist. Die Steckeinrichtung ist dabei so gestaltet, dass sie sich für einen befugten Versorger entriegeln kann, wodurch es dem Versorger ermöglicht wird, einen entladenen Wechselakkumulator zu entnehmen und durch einen geladenen Wechselakkumulator zu ersetzen. Bei einem befugten Versorger kann es sich beispielsweise um einen Servicetechniker des Wechselakkumulatorenystembetreibers, dem Betreiber der Ladesäule oder einer am Wechselakkumulatorensystem teilnehmende Person handeln, die zum Austauschen eines Wechselakkumulators berechtigt ist.

Die Ladeeinheit weist in der beschriebenen Weise auch den Laderegler und das Anschlusskabel und/oder die Wechselstromsteckdose für ein Kraftfahrzeug auf. Der Zweck der Ladeeinheit ist es, ein elektrisch betriebenes Kraftfahrzeug mit Energie zu versorgen. Der Laderegler ist insbesondere dazu eingerichtet, den Ladevorgang entsprechend der Anforderungen des Kraftfahrzeugs zu regeln. Dabei werden die Ladespannung und der Ladestrom so eingestellt, dass beispielsweise eine Schädigung oder eine Überladung des Akkus des Kraftfahrzeugs verhindert werden. Das Anschlusskabel und/oder die Wechselstromsteckdose wird zur Ermöglichung des Ladevorgangs mit einem Anschluss des Kraftfahrzeugs verbunden und ist insbesondere dazu eingerichtet, die von dem Laderegler ausgegebene elektrische Energie an das Kraftfahrzeug zu übertragen. Zusätzlich kann das Anschlusskabel und/oder die Wechselstromsteckdose dazu eingerichtet sein, Informationen über Anforderungen des Ladevorgangs von dem Kraftfahrzeug an den Laderegler zu übertragen.

Die Ladesäule umfasst auch die genannte Abrechnungseinheit zur Erstellung von Abrechnungsdaten und kann eine Speichereinheit sowie einen Mikroprozessor und/oder einen Mikrocontroller umfassen. Die Abrechungseinheit erzeugt Abrechnungsdaten im Zusammenhang mit der jeweils abgegebenen oder angelieferten Energie. Die Abrechnungseinheit kann die Abrechnungsdaten in der Speichereinheit speichern und/oder beispielsweise auf ein anderes Medium, wie eine Chipkarte übertragen. Hierfür kann die Abrechnungseinheit eine Schnittstelle zur Verfügung stellen, welche eine Verbindung des Mediums mit der Abrechnungseinheit ermöglicht. Wahlweise können die Abrechnungsdaten auch über die Kommunikationseinheit an einen Zentralrechner übertragen werden. Durch die Abrechnungseinheit ergibt sich der Vorteil, dass mehrere Benutzer die Ladesäule zum Aufladen ihres jeweiligen Kraftfahrzeugs nutzen können und dies getrennt erfasst oder abgerechnet werden kann. Durch die Abrechnungseinheit ergibt sich zudem der Vorteil, dass die Ladesäule in ein pfandbasiertes Wechselakkumulatorsystem integriert werden kann. Durch die selbstständig erfolgende Generierung von Abrechnungsdaten kann der Verwaltungsaufwand, insbesondere in Zusammenhang mit dem Auswechseln eines Wechselakkumulators reduziert werden. So kann einem Lieferanten die von ihm zur Verfügung gestellte Energiemenge automatisiert gutgeschrieben werden. Dies bietet sich beispielsweise an, wenn ein entladener Wechselakkumulator durch einen dezentralen Stromerzeuger ausgetauscht wird.

Durch die Erfindung ergibt sich der Vorteil, dass die Ladesäule durch die Verwendung eines Wechselakkumulatorenystems örtlich flexibel aufgestellt werden kann. Dies ergibt sich insbesondere aufgrund der Tatsache, dass die Ladesäule ein geringeres Leergewicht aufweist, als eine Ladesäule mit einem fest verbauten Akkumulator. Mit dem Leergewicht einer Ladesäule ist das Gewicht einer Ladesäule ohne eingesetzte Akkumulatoren gemeint. Dabei ist zu beachten, dass das Gewicht eines oder mehrerer Akkumulatoren einen großen Anteil des Gesamtgewichts ausmachen kann. Dies hat zur Folge, dass zum Transport einer Ladesäule keine leistungsstarken Maschinen benötigt werden. Somit kann eine derartige Ladesäule durch gewöhnliche Lieferwagen an den Aufstellungsort geliefert werden. Dies ermöglicht es, die Ladesäule auch an Orten aufzustellen, welche für leistungsstärkere Kraftfahrzeuge aufgrund Ihrer Größe nicht erreichbar sind, wie beispielsweise in Altstädten mit engen Straßen. Der andere Vorteil eines Wechselakkumulatorenystems ist das geringe Gewicht der einzelnen Wechselakkumulatoren.

Dadurch können diese beispielsweise auch mit Fahrradanhängern oder von Personen zu der Ladesäule transportiert werden. Hierdurch ergibt sich eine geringe Lärmbelastung sowie eine gute Erreichbarkeit, wodurch die Versorgung einer solchen Ladesäule insbesondere in Wohngebieten erleichtert wird. Ein weiterer Vorzug des Wechselakkumulatorsystems ist die durch den Tausch der entladenen gegen geladene Wechselakkumulatoren sehr kurze Zeit für die Wiederaufladung, so dass die mobile Ladesäule sofort wieder einsatzbereit ist.

Eine Weiterbildung der Erfindung sieht vor, dass die Ladesäule eine Kommunikationseinheit umfasst, welche dazu eingerichtet ist, den Ladezustand eines, in der Steckeinrichtung eingesetzten, Wechselakkumulatoren mit einer, in einem Zentralrechner hinterlegten Ladezustandsdatenbank auszutauschen. Bei der Kommunikationseinheit kann es sich beispielsweise um eine Kommunikationseinheit für eine kabellose Datenübertragung handeln. Bevorzugt handelt es sich dabei um eine Kommunikationseinheit, welche in ein System zur Bereitstellung eines kabellosen Internetzugangs eingebunden ist, wodurch der Aufbau einer eigenen Kommunikationsinfrastruktur entfällt. Die Kommunikationseinheit ist dabei mit der Steckeinrichtung der Ladesäule verbunden. Somit ist es möglich, den durch die Steckeinrichtung erfassten Ladezustand eines Wechselakkumulatoren mittels der Kommunikationseinheit mit einer, in einem Zentralrechner hinterlegten, Zustandsdatenbank auszutauschen. Dadurch ergibt sich der Vorteil, dass unter anderem der Betreiber der Ladesäule, ein potentieller Kunde sowie ein Versorger, den Ladezustand eines Wechselakkumulatoren an einer zentralen Stelle abfragen können.

Eine Weiterbildung der Erfindung sieht vor, dass die Ladesäule eine Kommunikationseinheit umfasst, welche dazu eingerichtet ist, die Abrechnungsdaten mit einer, in einem Zentralrechner hinterlegten, Abrechnungsdatenbank auszutauschen. Mit anderen Worten ist die Ladesäule in ein zentrales Abrechnungssystem eingebunden. Bei der Kommunikationseinheit kann es sich beispielsweise um eine Kommunikationseinheit zur Anbindung an ein kabelloses Kommunikationsnetzwerk handeln. Die Kommunikationseinheit ist dabei mit der Abrechnungseinheit der Ladesäule verbunden. Somit ist es möglich, die von der Abrechnung Einheit generierten Abrechnungsdaten mit einer, in einem Zentralrechner hinterlegten Abrechnungsdatenbank auszutauschen. Dadurch ergibt sich der Vorteil, dass eine Verwaltung der generierten Abrechnungsdaten in einem Zentralrechner erfolgen kann. Somit ist es nicht erforderlich, aufwendigere Einheiten und Verfahren zur Verwaltung der Abrechnungsdaten in die Ladesäule zu integrieren.

Eine Weiterbildung der Ladesäule sieht vor, dass die Ladesäule eine Fahreinrichtung, bestehend aus einer Kupplung und/oder Haltegriff und zumindest einem Rad umfasst. Mit anderen Worten ist die Ladesäule so konstruiert, dass kein Transportmittel für die Verlegung der Ladesäule zu ihrem Standort erforderlich ist. Dadurch ergibt sich der Vorteil, dass die Ladesäule direkt an ein Kraftfahrzeug oder ein Fahrrad gekoppelt oder von einer Person gezogen oder geschoben werden kann. Es ist somit beispielsweise nicht notwendig, die Ladesäule auf einen Lastkraftwagen zu heben und am Zielort mittels eines Krans oder eines Gabelstaplers abzusetzen. Somit wird der technische Aufwand bei der Aufstellung der Ladesäule reduziert.

Eine Weiterbildung sieht vor, dass die Ladesäule eine Kommunikationseinheit mit einem integrierten Empfänger eines globalen zivilen Satellitennavigationssystems umfasst. Dabei kann es sich beispielsweise um ein Empfängermodul des GPS-Systems handeln. Der Empfänger ermöglicht es, die Position der Ladesäule zu bestimmen. Bevorzugter Weise kann die erfasste Position der Ladesäule über die Kommunikationseinheit an den Zentralrechner übertragen werden. Dadurch ergibt sich der Vorteil, dass es möglich ist, die tatsächliche geografische Position der Ladesäule zu erfassen. Somit ist es beispielsweise möglich, eine Abweichung der Soll- von der Ist-Position zu erfassen.

Eine Weiterbildung sieht vor, dass der Laderegler einen Spannungswandler zur Veränderung der Ausgangsspannung umfasst. Die damit erzeugte Ausgangsspannung ist dabei von der Ausgangsgleichspannung des zumindest einen Wechselakkumulators verschieden. Bei dem Spannungswandler kann es sich um einen DC/DC-Wandler handeln. Dadurch ergibt sich der Vorteil, dass die Ausgangsgleichspannung an die Erfordernisse das zu ladenden Kraftfahrzeugs angepasst werden kann. Die mit dem Spannungswandler erzeugte Ausgangsgleichspannung ist insbesondere größer als die Ausgangsgleichspannung des zumindest einen Wechselakkumulators.

Eine Weiterbildung sieht vor, dass der Laderegler einen Wechselrichter zur Erzeugung einer Wechselspannung umfasst und die mobile wechselakkumulatorbetriebenen Ladesäule die (bevorzugt genormte) Wechselstromsteckdose, welche an den Laderegler angeschlossen ist. Die erzeugte Wechselspannung kann somit der genormten Wechselstromsteckdose oder dem Ladekabel zugeführt werden. Durch die Bereitstellung von Wechselspannung können auch weitere Geräte mit Strom versorgt werden. Dabei kann der Wechselrichter beispielsweise eine Nennspannung von 230 V bei 50 Hz erzeugen. Mit genormt wird gemeint, dass es sich um eine Steckdose handelt, welche in ihrer Form einem Standard entspricht. Es kann sich beispielsweise um eine Steckdose für den Stecker-Typ F handeln. Dadurch ergibt sich der Vorteil, dass die Ladesäule auch zur Versorgung anderer elektrischer Geräte geeignet ist.

Die Erfindung umfasst auch einen Zentralrechner, der eine Ladezustandsdatenbank sowie eine Abrechnungsdatenbank umfasst und dazu eingerichtet ist, zumindest Ladezustands- und Abrechnungsdaten mit der mobilen wechselakkumulatorbetriebenen Ladesäule auszutauschen. Es ist somit möglich, dass die Ladezustands- und Abrechnungsdaten der Ladesäule von dem Zentralrechner empfangen und verwaltet werden können. Bei dem Zentralrechner kann es sich um einen Rechner handeln, welcher an das Internet angeschlossen ist oder eine Kommunikationseinheit zur drahtlosen Kommunikation mit der Ladesäule aufweist. Dadurch ergibt sich der Vorteil, dass die Daten an einer zentralen Stelle außerhalb der Ladesäule abrufbar und verwaltbar sind. Mit anderen Worten ist eine physische Präsenz an der Ladesäule nicht erforderlich um diese zu verwalten. Ein weiterer Vorteil ist, dass es nicht notwendig ist, Module zur weitergehenden Datenverwaltung in die Ladesäule zu integrieren, weil die entsprechenden Dienste in dem Zentralrechner ablaufen. Dadurch wird der Wartungsaufwand der Ladesäule reduziert. Der Zentralrechner kann auch die geografische Position einer Ladesäule überwachen. So kann er dazu eingerichtet sein, das unberechtigte Entfernen einer Ladesäule zu erfassen.

Im Folgenden ist ein Ausführungsbeispiele der Erfindung beschrieben. Hierzu zeigt die einzige Figur eine mögliche Ausführungsform der Ladesäule.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In der Figur sind funktionsgleiche Elemente jeweils mit denselben Bezugszeichen versehen.

Die einzige Figur zeigt eine Ladesäule 1. Die Ladesäule 1 kann eine Steckeinrichtung 2 für Wechselakkumulatoren 3 aufweisen, in die ein oder mehrere Wechselakkumulatoren 3 gesteckt werden können. Die Steckeinrichtung kann so eingerichtet sein, dass sie Ladezustandsdaten 4, über einen Wechselakkumulator 3 erzeugen kann. Die Steckeinrichtung 2 kann so eingerichtet sein, dass sie sich für einen Versorger 5 entriegelt. Hierfür kann die Steckeinrichtung 2 ein Modul umfassen, welches dazu eingerichtet ist, einen befugten Versorger 5 zu identifizieren und ihm einen Austausch P1 eines Wechselakkumulators 3 zu ermöglichen. Dabei kann es sich beispielsweise um ein Kartenlesegerät oder eine Eingabevorrichtung handeln. Die Wechselakkumulatoren 3 können Teil eines Wechselakkumulatorsystems sein, welches die Einhaltung bestimmter Normen bezüglich der Ausgestaltung eines Wechselakkumulatoren 3 und/oder einer Steckeinrichtung 2 erfordert. Wechselakkumulatoren 3 können ein Gewicht und eine räumlicher Abmessungen aufweisen, welche es einer Person ermöglichen, diese ohne technische Hilfsmittel zu tragen.

Die Ladesäule 1 kann eine Ladeeinheit 6 umfassen, welche einen Laderegler 7 und ein Anschlusskabel 8 für ein Kraftfahrzeug 9 aufweist. Die Ladeeinheit 6 ist dazu eingerichtet einen Ladevorgang P2 eines Kraftfahrzeugs 9 durch die Ladesäule 1 zu ermöglichen. Das Anschlusskabel 8 ist dazu eingerichtet, eine leitende Verbindung mit einem elektrisch angetriebenen Kraftfahrzeug 9 herzustellen. Um eine Verwendung mit verschiedenen Kraftfahrzeugtypen zu ermöglichen, kann das Anschlusskabel 8 einen Universalstecker aufweisen, welcher mit mehr als einem Kraftfahrzeugtyp verbunden werden kann. Das Anschlusskabel 8 kann auch dazu ausgelegt sein, einen Datenaustausch zwischen dem Kraftfahrzeug 9 und der Ladesäule 1 zu ermöglichen. So kann der Ladezustand des Kraftfahrzeugs oder die erforderliche Ladespannung bzw. der erforderliche Ladestrom von dem Fahrzeug 9 an die Ladesäule 1 übertragen werden. Der Laderegler 7 kann so eingerichtet sein, dass er den Ladestrom und die Ladespannung den Anforderungen eines jeweiligen Kraftfahrzeugs 9 anpassen kann. Insbesondere kann er einen Wechselrichter und einen Spannungswandler umfassen.

Der Laderegler 7 kann mit einer Wechselstromsteckdose (D) verbunden sein. Dadurch können auch andere Geräte mit Strom versorgt werden.

Die Ladesäule 1 kann eine Abrechnungseinheit 10 aufweisen, welche dazu eingerichtet ist, Abrechnungsdaten 11 zu erzeugen. Die Abrechnungseinheit 10 kann eine Schnittstelle aufweisen, welche es ermöglicht, Abrechnungsdaten 11 auf ein Medium zu übertragen. Dabei kann es sich beispielsweise um eine Chipkarte handeln. Die erzeugten Abrechnungsdaten 11 können abhängig von der Energie sein, welche der Ladesäule 1 mittels eines Austauschs P1 eines Wechselakkumulators 3 hinzugefügt oder über einen Ladevorgang P2 entnommen wurde.

Die Ladesäule 1 kann auch eine Kommunikationseinheit 12 aufweisen, welche mit der Steckeinrichtung 2 und der Abrechnungseinheit 10 verbunden sein kann und welche dazu ausgelegt ist, Abrechnungsdaten 11 und Ladezustandsdaten 4 mit einem Zentralrechner 13 auszutauschen. Bei der Kommunikationseinheit 12 kann es sich beispielsweise um ein GSM Modul zur kabellosen Datenübertragung handeln. Die Kommunikationseinheit kann einen integrierten Empfänger eines globalen zivilen Satellitennavigationssystems umfassen. Damit ist es möglich, den aktuellen geografischen Standort der Ladesäule zu erfassen. Der geografische Standort kann über die Kommunikationseinheit versendet werden.

Bei dem Zentralrechner 13 kann es sich um ein Rechner handeln, welcher eine Abrechnungsdatenbank 14 und eine Ladezustandsdatenbank 15 umfasst und über ein Kommunikationsmodul mit der Kommunikationseinheit der Ladesäule 1 die entsprechenden Daten 4,11 austauschen P3 kann. Der Zentralrechner 13 kann dazu eingerichtet sein, dass er es einem Betreiber 16 der Ladesäule, einem Kraftfahrzeug 9, sowie einem Versorger 5 ermöglicht, diese Daten 4,11 abzurufen P4.

Die Ladesäule kann eine Fahreinrichtung 17 aufweisen, welche eine Kupplung und oder einen Haltegriff und zumindest ein Rad umfasst. Die Kupplung kann als Anhängerkupplung oder Fahrradkupplung gestaltet sein. Der Haltegriff kann so gestaltet sein, dass es einer Person möglich ist, die Ladesäule zu schieben bzw. zu ziehen. Das zumindest eine Rad kann so eingerichtet sein, dass es blockiert werden kann, sodass die Ladesäule 1 nicht unberechtigt von ihrer Position entfernt werden kann.

Insgesamt zeigen die Beispiele, wie durch die Erfindung eine Vorrichtung zur Verfügung gestellt wird, welche eine örtlich flexible Lademöglichkeit für elektrisch betriebene Kraftfahrzeuge darstellt.

## Patentansprüche

1. Mobile wechselakkumulatorbetriebene Ladesäule (1), umfassend eine Steckeinrichtung (2) für zumindest einen Wechselakkumulator (3), eine Ladeeinheit (6), aufweisend einen Laderegler (7) und ein Anschlusskabel (8) und/oder eine Wechselstromsteckdose (D) für ein Kraftfahrzeug (9), und eine Abrechnungseinheit (10),
**dadurch gekennzeichnet, dass**
die Ladesäule (1) dazu eingerichtet ist, in einem jeweiligen Ladevorgang (P2) ein elektrisch betriebenes Kraftfahrzeug (9) mit Energie des in der Steckeinrichtung (2) eingesetzten zumindest einen Wechselakkumulators (3) über die Ladeeinheit (6) aufzuladen, während an deren Anschlusskabel (8) und/oder Wechselstromsteckdose (D) das Kraftfahrzeug (9) angeschlossen ist,
die Steckeinrichtung (2) dazu eingerichtet ist, sich für zumindest einen befugten Versorger (5) zu entriegeln, wodurch ein Austausch (P1) eines entladenen Wechselakkumulators (3) durch einen geladenen Wechselakkumulator (3) gewährt wird,
wobei
die Abrechnungseinheit (10) dazu eingerichtet ist, bei dem jeweiligen Ladevorgang (P2) für die abgegebene Energie und/oder bei dem Austausch (P1) des zumindest einen Wechselakkumulatoren (3) für die gelieferte Energie jeweils Abrechnungsdaten (11) zu generieren.

2. Mobile wechselakkumulatorbetriebene Ladesäule (1) nach Anspruch 1, **dadurch gekennzeichnet, dass** die Ladesäule (1) eine Kommunikationseinheit (12) umfasst, welche dazu eingerichtet ist, den Ladezustand (4) der in der Steckeinrichtung (2) eingesetzten Wechselakkumulatoren (3) mit einer in einem Zentralrechner (13) hinterlegten Ladezustandsdatenbank (15) auszutauschen.

3. Mobile wechselakkumulatorbetriebene Ladesäule (1) nach einem der vorhergehenden Ansprüche, **dadurch gekennzeichnet, dass** die Ladesäule (1) eine Kommunikationseinheit (12) umfasst, welche dazu eingerichtet ist, die Abrechnungsdaten (11) mit einer in einem Zentralrechner (13) hinterlegten Abrechnungsdatenbank (14) auszutauschen.

4. Mobile wechselakkumulatorbetriebene Ladesäule (1) nach einem der vorhergehenden Ansprüche, **dadurch gekennzeichnet, dass** die Ladesäule (1) eine Fahreinrichtung (17), aufweisend einerseits eine Kupplung und/oder einen Haltegriff und andererseits zumindest ein Rad, umfasst.

5. Mobile wechselakkumulatorbetriebene Ladesäule (1) nach einem der vorhergehenden Ansprüche, **dadurch gekennzeichnet, dass** die Ladesäule eine Kommunikationseinheit (12) mit einem integrierten Empfänger eines globalen zivilen Satellitennavigationssystems umfasst.

6. Mobile wechselakkumulatorbetriebene Ladesäule (1) nach einem der vorhergehenden Ansprüche, **dadurch gekennzeichnet, dass** der Laderegler (7) einen Spannungswandler zur Veränderung einer Ausgangsgleichspannung umfasst, wobei die damit erzeugte Ausgangsgleichspannung von einer jeweiligen Ausgangsgleichspannung des zumindest einen Wechselakkumulators verschieden ist.

7. Mobile wechselakkumulatorbetriebene Ladesäule (1) nach einem der vorhergehenden Ansprüche, **dadurch gekennzeichnet, dass** der Laderegler (7) einen Wechselrichter zur Erzeugung einer Wechselspannung umfasst und die mobile wechselakkumulatorbetriebene Ladesäule (1) eine genormte Wechselstromsteckdose (D), wobei die genormte Wechselstromsteckdose (D) an den Laderegler angeschlossen ist.

8. Zentralrechner (13), **dadurch gekennzeichnet, dass** der Zentralrechner (13) eine Ladezustandsdatenbank (15) sowie eine Abrechnungsdatenbank (14) umfasst und dazu eingerichtet ist, zumindest Ladezustandsdaten (4) und Abrechnungsdaten (11) mit einer mobilen wechselakkumulatorbetriebenen Ladesäule (1) nach einem der vorhergehenden Ansprüche auszutauschen (P3) und deren geografische Position zu überwachen.
